# EUROPÄISCHE PATENTSCHRIFT

(11) **EP 3 436 321 B1**
(45) Veröffentlichungstag und Bekanntmachung des Hinweises auf die Patenterteilung: **06.09.2023**
(21) Anmeldenummer: 17704250.4
(22) Anmeldetag: 09.02.2017
(51) Int. Cl.: B60T 13/58, B60T 13/74

(54) **VERFAHREN ZUM BEREITSTELLEN EINER BREMSKRAFT IN EINEM FAHRZEUG**
METHOD FOR PROVIDING A BRAKE FORCE IN A VEHICLE
PROCÉDÉ POUR FOURNIR UNE FORCE DE FREINAGE DANS UN VÉHICULE

(30) Priorität: 31.03.2016 DE 102016205298
(43) Veröffentlichungstag der Anmeldung: 06.02.2019
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE); WOLFF, Helmut, 74199 Untergruppenbach (DE); MANNHERZ, Edith, 74189 Weinsberg (DE)
(86) Internationale Anmeldenummer: PCT/EP2017/052877
(87) Internationale Veröffentlichungsnummer: WO 2017/167482

(56) Entgegenhaltungen:
- DE-A1-102008 012 338
- DE-A1-102011 078 900

## Beschreibung

### Stand der Technik

In der DE 10 2011 078 900 A1 wird eine elektromechanische Feststellbremse beschrieben, über die ein Fahrzeug im Stillstand am Wegrollen gehindert wird. Die Feststellbremse umfasst einen elektrischen Bremsmotor, über den eine Klemmkraft zum Festsetzen des Fahrzeuges erzeugbar ist. Hierbei wird die Rotationsbewegung des elektrischen Bremsmotors in eine axiale Stellbewegung einer Spindelmutter übertragen, über die ein Bremskolben, der Träger eines Bremsbelages ist, axial gegen eine Bremsscheibe gedrückt wird.

Der elektrische Bremsmotor ist in eine Radbremseinrichtung integriert, die Teil der hydraulischen Fahrzeugbremse des Fahrzeuges ist. Das Hydraulikfluid der Fahrzeugbremse wirkt ebenfalls auf den Bremskolben.

Die DE 10 2008 012 338 A1 offenbart ein Verfahren zum Bereitstellen von Bremskraft in einem Fahrzeug, bei dem zunächst über eine Betätigung eines elektrischen Bremsmotors der Leerlaufweg ohne elektromechanischen Kraftkraftaufbau überwunden wird. Anschließend wird ein hydraulischer Bremsdruck erzeugt und schließlich der elektrische Bremsmotor zum Überwinden einer durch den hydraulischen Bremsdruck hervorgerufenen Verschiebung des Bremskolbens sowie zum elektromechanischen Bremskraftaufbau erneut betätigt.

### Offenbarung der Erfindung

Mithilfe des erfindungsgemäßen Verfahrens wird eine Bremskraft in einem Fahrzeug bereitgestellt, das eine hydraulische Fahrzeugbremse sowie eine elektromechanische Bremsvorrichtung mit einem elektrischen Bremsmotor aufweist. Der Bremsmotor der elektromechanischen Bremsvorrichtung wirkt auf einen Bremskolben, der einen Bremsbelag trägt, wobei bei einer Verstellbewegung des Bremskolbens der Bremsbelag gegen eine Bremsscheibe gepresst wird. Die Rotationsbewegung des Rotors des elektrischen Bremsmotors wird hierbei vorteilhafterweise in eine axiale Stellbewegung einer Spindelmutter übertragen, die gegen den Bremskolben drückt.

Die hydraulische Fahrzeugbremse umfasst eine oder mehrere Radbremseinrichtungen an einem bzw. mehreren Rädern des Fahrzeugs, in denen unter Hydraulikdruck stehendes Bremsfluid den gleichen Bremskolben beaufschlagt, der auch von dem elektrischen Bremsmotor der elektromechanischen Bremsvorrichtung verstellt wird. Der Bremskolben kann alternativ oder kombiniert sowohl von dem elektrischen Bremsmotor als auch von dem Bremsfluid verstellt werden.

Bei dem Verfahren wird zum Bereitstellen einer Bremskraft zunächst der elektrische Bremsmotor so lange betätigt, bis der Leerlaufweg des elektrischen Bremsmotors ohne elektromechanischen Bremskraftaufbau überwunden ist und die Spindelmutter, die von der Rotorwelle des elektrischen Bremsmotors verstellt wird, auf Kontakt mit dem Bremskolben liegt, ohne jedoch eine Bremskraft zu erzeugen.

Anschließend wird im nächsten Schritt ein hydraulischer Bremsdruck erzeugt, so dass in der Radbremseinrichtung auf hydraulische Weise selbsttätig Bremskraft erzeugt wird. Währenddessen bleibt der elektrische Bremsmotor in seiner zuvor erreichten Kontaktposition, ohne eine elektromechanische Bremskraft zu erzeugen.

In einem weiteren Schritt wird schließlich der elektrische Bremsmotor erneut betätigt und zunächst ein Spiel überwunden, das durch die Verschiebung des Bremskolbens aufgrund des hydraulischen Bremsdrucks hervorgerufen wird und einen zusätzlichen Leerweg darstellt. Der elektrische Bremsmotor wird anschließend über diesen Punkt hinausgehend weiter betrieben, so dass der Bremsmotor den Bremskolben verstellt und ein elektromechanischer Bremskraftaufbau durch den Bremsmotor erreicht wird.

Diese Vorgehensweise hat den Vorteil, dass nach Abschluss des selbsttätig durchgeführten Bremsvorgangs die verstellte Kolbenposition von dem elektrischen Bremsmotor durch die Selbsthemmung des Bremsmotors arretiert wird. Somit ist nach Beendigung des Bremsvorganges gewährleistet, dass der Bremskolben in seiner aktuellen Kolbenposition verbleibt, die er durch die Beaufschlagung sowohl des hydraulischen Bremsdrucks als auch durch den elektrischen Bremsmotor einnimmt, so dass entsprechend Bremskraft auf hydraulischem und auf elektromechanischem Weg erzeugt wird. Die Verschiebung des Bremskolbens durch den hydraulischen Bremsdruck und Elastizitäten in der Radbremseinrichtung, die zu einer Minderung der Bremskraft führen könnten, können kompensiert werden.

Es wird die durch den hydraulischen Bremsdruck hervorgerufene Verschiebung des Bremskolbens bestimmt und aus der Verschiebung des Bremskolbens auf den tatsächlichen hydraulischen Bremsdruck in der Radbremseinrichtung geschlossen. Die Bestimmung der Verschiebung des Bremskolbens durch den hydraulischen Bremsdruck erfolgt vorteilhafterweise im Anschluss an die Erzeugung des hydraulischen Bremsdrucks sowie der erneuten Betätigung des elektrischen Bremsmotors, der zunächst den zusätzlichen Leerweg überwindet, der durch den hydraulischen Bremsdruck entsteht. Dieser zusätzliche Leerweg entspricht der Verschiebung des Bremskolbens aufgrund der Beaufschlagung mit hydraulischem Bremsdruck.

Der Leerweg im ersten Schritt sowie der zusätzliche Leerweg im dritten Schritt können anhand motorischer Zustandsgrößen bestimmt werden, insbesondere anhand des Stromverlaufs des elektrischen Bremsmotors, da der Stromverlauf im Leerlauf des Bremsmotors zumindest annähernd konstant ist. Dementsprechend lässt sich der Kontaktpunkt zwischen der Spindelmutter, die von der Rotorwelle des elektrischen Bremsmotors verstellt wird, und dem Bremskolben aus dem Anstieg des Stromverlaufs mit hinreichender Präzision bestimmen.

Die Verschiebung des Bremskolbens korreliert mit dem aufgebrachten hydraulischen Bremsdruck, so dass bei bekannter Verschiebung des Bremskolbens - bestimmt aus dem zusätzlichen Leerweg des elektrischen Bremsmotors - auf den tatsächlich anliegenden, hydraulischen Bremsdruck geschlossen wird.

Dieser hydraulische Bremsdruck muss mit einem Soll-Bremsdruck übereinstimmen. Ist dies nicht der Fall, so kann ein Warnsignal ausgegeben werden, dass dem Fahrer zur Anzeige gebracht und/oder zur weiteren Verarbeitung genutzt werden kann, beispielsweise in einem elektronischen Regelkreis im Fahrzeug. Wird beispielsweise eine zu kleine Verschiebung des Bremskolbens erkannt, lässt dies auf einen unzureichenden, tatsächlichen hydraulischen Bremsdruck schließen, was zur Ausgabe des Warnsignals führt.

Mit dem Aufbau der elektromechanischen Bremskraft durch den Bremsmotor verschiebt sich der Bremskolben, wodurch sich das Volumen vergrößert, welches von dem hydraulischen Bremsfluid eingenommen wird. Dies führt zu einem Abfall des hydraulischen Bremsdrucks, der gemäß einer bevorzugten Ausführung durch Betätigung eines hydraulischen Stellers ausgeglichen wird. Der Ausgleich erfolgt vorzugsweise vor dem Abschaltzeitpunkt des elektrischen Bremsmotors zur Beendigung des Verfahrens zum Bereitstellen von Bremskraft.

Nachdem der elektrische Bremsmotor im Anschluss an den hydraulischen Bremsdruck auf elektromechanische Weise Bremskraft aufgebaut hat, erfolgt die Abschaltung des Bremsmotors und die Verriegelung aufgrund der Selbsthemmung des Bremsmotors, wodurch auch der hydraulische Bremskraftanteil beibehalten wird und durch Superposition sowohl der hydraulische als auch der elektromechanische Bremskraftanteil dauerhaft wirksam ist.

Gemäß noch einer weiteren zweckmäßigen Ausführung wird die durch den hydraulischen Bremsdruck hervorgerufene Verschiebung des Bremskolbens an zwei verschiedenen Radbremseinrichtungen im Fahrzeug bestimmt, vorzugsweise an der gleichen Achse des Fahrzeugs, und im Fall einer Abweichung ein Warnsignal erzeugt. Sofern die Radbremseinrichtungen verschiedenen Bremskreisen angehören, kann gegebenenfalls in den verschiedenen Bremskreisen ein hydraulischer Druckunterschied festgestellt und ein entsprechendes Warnsignal erzeugt werden. Aber auch bei Zugehörigkeit zum gleichen Bremskreis kann im Fall einer Abweichung ein Warnsignal erzeugt werden.

Des Weiteren ist es möglich, den Leerlaufweg des elektrischen Bremsmotors an zwei unterschiedlichen Radbremseinrichtungen zu bestimmen, wobei im Fall einer Abweichung ein Warnsignal erzeugt wird. Der Leerlaufweg wird entweder im ersten Schritt bestimmt, bei dem zunächst der elektrische Bremsmotor nur den Leerlaufweg ohne anschließenden elektromechanischen Bremskraftaufbau überwindet, und/oder im weiteren Schritt, nachdem hydraulischer Bremsdruck erzeugt wurde und anschließend der zusätzliche Leerweg vom elektrischen Bremsmotor zurückgelegt wird.

Der hydraulische Druckabfall, hervorgerufen durch den elektromechanischen Bremskraftaufbau, kann entweder durch Betätigung eines hydraulischen Stellers ausgeglichen werden, beispielsweise im Rahmen einer Ausgleichsregelung, insbesondere während des Aufbaus elektromechanischer Bremskraft. Gemäß einer weiteren zweckmäßigen Ausführung erfolgt durch einen Zusatzanteil im hydraulischen Bremsdruck eine Kompensation, wobei der Zusatzanteil vorteilhafterweise als Vorsteuerung von vornherein berücksichtigt wird. Da für den Normalfall der hydraulische Druckabfall zumindest annähernd bekannt ist, kann dieser durch eine entsprechende Erhöhung von vornherein im hydraulischen Bremsdruck berücksichtigt werden.

Als hydraulischer Steller kommt beispielsweise eine Hydraulikpumpe eines elektronischen Stabilitätsprogramms (ESP) oder ein Bremskraftverstärker im Bremskreis, zum Beispiel ein iBooster bzw. eBooster in Betracht.

Das Verfahren kann zum Erzeugen einer Parkbremskraft im Stillstand des Fahrzeugs durchgeführt werden. Es ist aber auch möglich, eine Bremskraft bei einem fahrenden Fahrzeug mithilfe des Verfahrens zu generieren, wobei das Verfahren vorzugsweise unterhalb eines Geschwindigkeitsgrenzwertes durchgeführt wird. Der Geschwindigkeitsgrenzwert liegt beispielsweise bei 30 km/h oder einem geringeren Wert. Mithilfe des selbsttätigen Bremskraftaufbaus auf hydraulischem und elektromechanischem Wege kann zum Beispiel ein automatisierter Parkvorgang durchgeführt werden. Des Weiteren ist es möglich, auf automatisiertem Wege eine Bremskraft auch unabhängig von einem Parkmanöver bei fahrendem Fahrzeug zu generieren.

Es kann mithilfe der Parkbremse beispielsweise ein hochautomatisierter Einparkvorgang, insbesondere ohne Fahrereingriff, mit höherer Sicherheit durchgeführt werden, bei dem sich der Fahrer ggf. außerhalb des Fahrzeugs befindet. Während des Einparkvorgangs wird das Fahrzeug üblicherweise mit der hydraulischen Fahrzeugbremse abgebremst. Bei einem Ausfall der hydraulischen Fahrzeugbremse kann das Fahrzeug von dem elektrischen Bremsmotor der Parkbremse abgebremst werden.

Nach Beendigung des automatisierten Einparkvorgangs kann der hydraulische Bremsdruck erforderlichenfalls auf den Zieldruck angehoben werden. Soweit der Kontaktpunkt zwischen Spindelmutter und Bremskolben durch Ansteuerung des Bremsmotors bereits angefahren worden ist, kann über die erneute Aktuierung der Parkbremse über den zusätzlichen Leerweg festgestellt werden, ob der geforderte Hydraulikdruck erreicht worden ist.

Die verschiedenen Verfahrensschritte laufen selbsttätig ab und werden insbesondere in einem Regel- und/oder Steuergerät durchgeführt. Dieses Steuergerät kann Bestandteil des Fahrzeugbremssystems sein oder mit dem Regel- bzw. Steuergerät des Fahrzeugbremssystems kommunizieren.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse mit einem Bremskraftverstärker, wobei die Radbremseinrichtungen der Fahrzeugbremse an der Fahrzeughinterachse zusätzlich als elektromechanische Bremsvorrichtung mit einem elektrischen Bremsmotor ausgeführt sind,
- Fig. 2: einen Schnitt durch eine elektromechanische Bremsvorrichtung mit einem elektrischen Bremsmotor,
- Fig. 3: ein Ablaufschema mit Verfahrensschritten zum Bereitstellen einer Bremskraft in einem Fahrzeug.

In den Figuren sind gleiche Bauteile mit gleichen Bezugszeichen versehen.

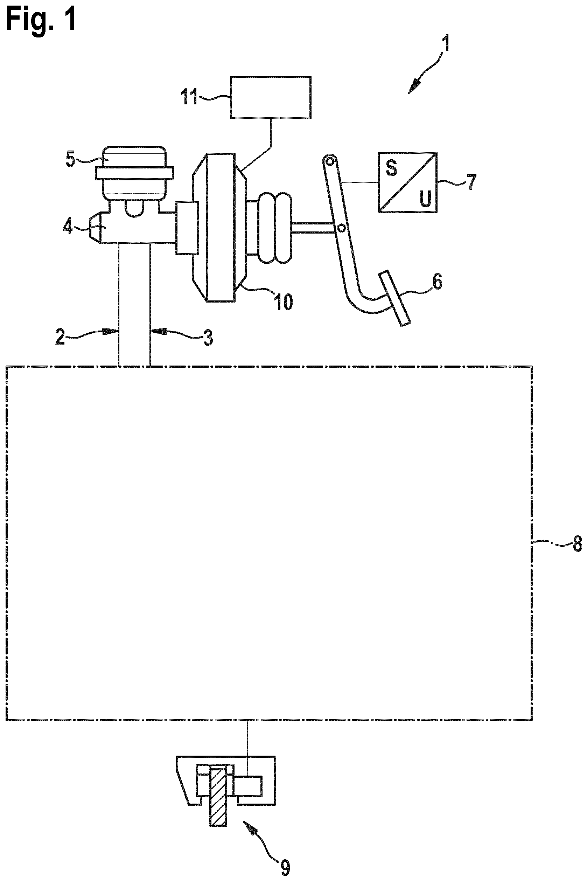

Die in Fig. 1 dargestellte hydraulische Fahrzeugbremse 1 für ein Fahrzeug umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher bevorzugt über ein Getriebe den Hauptbremszylinder 4 betätigt (iBooster).

Die vom Pedalwegsensor 7 gemessene Stellbewegung des Bremspedals 6 wird als Sensorsignal an ein Regel- bzw. Steuergerät 11 übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist.

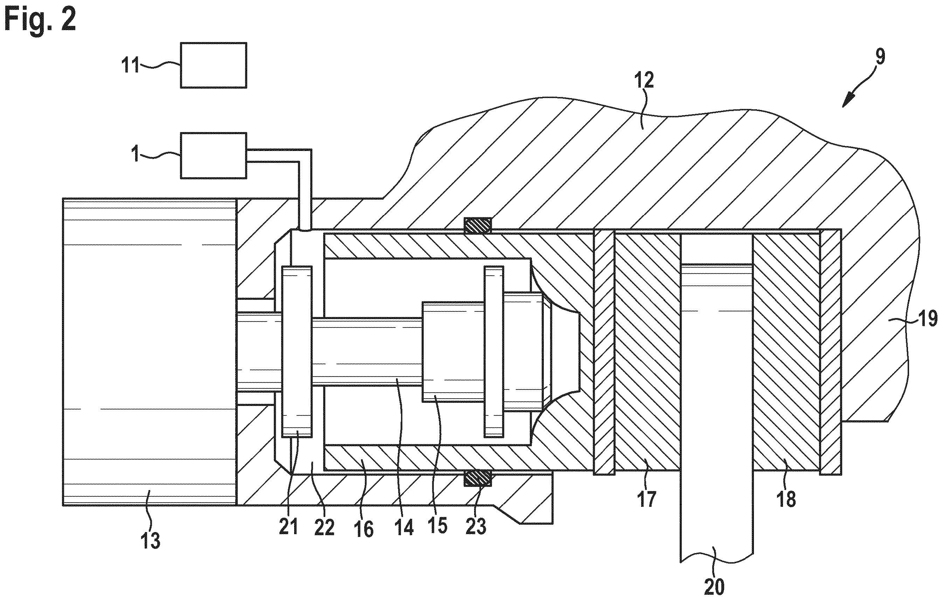

In Fig. 2 ist die Radbremseinrichtung 9, die an einem Rad an der Hinterachse des Fahrzeugs angeordnet ist, im Detail dargestellt. Die Radbremseinrichtung 9 ist Teil der hydraulischen Fahrzeugbremse 1 und wird aus dem Hinterachs-Bremskreis mit Bremsfluid 22 versorgt. Die Radbremseinrichtung 9 weist außerdem eine elektromechanische Bremsvorrichtung auf, die bevorzugt als Feststellbremse zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann.

Die elektromechanische Bremsvorrichtung umfasst einen Bremssattel 12 mit einer Zange 19, welche eine Bremsscheibe 20 übergreift. Als Stellglied weist die Bremsvorrichtung einen Gleichstrom-Elektromotor als Bremsmotor 13 auf, dessen Rotorwelle eine Spindel 14 rotierend antreibt, auf der eine Spindelmutter 15 rotationsfest gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 druckdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Anschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Regel- bzw. Steuergerät 11 erzeugt.

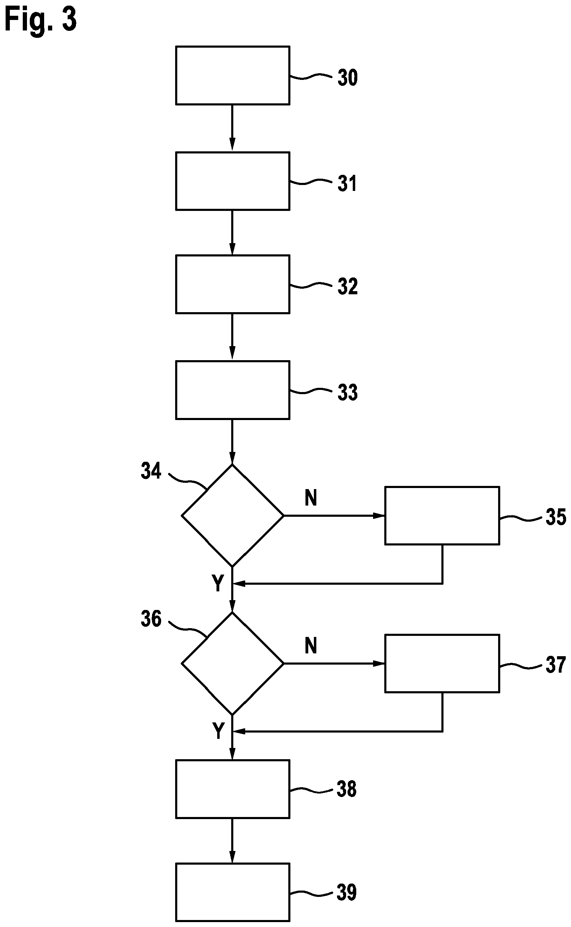

In Fig. 3 ist ein Ablaufschema mit Verfahrensschritten zum Bereitstellen einer Bremskraft in einem Fahrzeug dargestellt. Das Verfahren kann sowohl bei stillstehendem Fahrzeug zum Erzeugen einer Parkbremskraft als auch bei fahrendem Fahrzeug, beispielsweise während eines Einparkvorganges, automatisiert durchgeführt werden.

Zunächst wird in einem ersten Verfahrensschritt 30 nach dem Start des Verfahrens der elektrische Bremsmotor der elektromechanischen Bremsvorrichtung betätigt und die Rotorwelle des Bremsmotors im Leerlauf so weit verfahren, bis die Spindelmutter in Kontakt mit dem Bremskolben gelangt. Der Weg, den die Spindelmutter von ihrer Ausgangsposition bis zum Kontaktpunkt im Bremskolben zurücklegt, stellt den Leerweg dar, der ohne Bremskraftaufbau zurückgelegt wird. Der elektrische Bremsmotor wird am Kontaktpunkt gestoppt.

Anschließend wird im folgenden Verfahrensschritt 31 die hydraulische Fahrzeugbremse selbsttätig betätigt und mithilfe eines hydraulischen Stellers, beispielsweise der ESP-Pumpe oder einem iBooster, ein hydraulischer Bremsdruck erzeugt. Die Höhe des Bremsdrucks ergibt sich aus der aktuellen Anwendung und wird auf einen Solldruck eingestellt.

Im nächsten Verfahrensschritt 32 wird im Anschluss an die Erhöhung des hydraulischen Bremsdrucks der elektrische Bremsmotor erneut betätigt, um einen Zusatzleerweg zurückzulegen, der durch die Bremskolbenverstellung aufgrund der hydraulischen Bremsdruckerzeugung entstanden ist. Der Zusatzleerweg wird durch Betätigung des elektrischen Bremsmotors im Leerlauf bis zum erneuten Erreichen des Kontaktpunktes zwischen Spindelmutter und Bremskolben zurückgelegt.

Sobald der Zusatzleerweg zurückgelegt worden ist und der zweite Kontaktpunkt erreicht worden ist, wird im folgenden Verfahrensschritt 33 der tatsächlich vorliegende hydraulische Druck in der Radbremseinrichtung ermittelt. Dies erfolgt auf der Grundlage des zurückgelegten Zusatzleerwegs aus dem Verfahrensschritt 32, der den Kolbenweg repräsentiert, den der Bremskolben durch das Erzeugen des hydraulischen Bremsdrucks zurückgelegt hat. Der Zusatzleerweg korreliert mit dem aktuellen hydraulischen Bremsdruck.

Im Verfahrensschritt 34 erfolgt eine Abfrage, ob der tatsächliche Bremsdruck, der im Schritt 33 ermittelt wurde, mit dem hydraulischen Solldruck übereinstimmt. Ist dies nicht der Fall, wird der Nein-Verzweigung ("N") folgend zum Schritt 35 fortgefahren, in welchem ein Warnsignal erzeugt wird, und anschließend zum Schritt 36 fortgefahren. Stimmen dagegen der tatsächliche hydraulische Bremsdruck und der Solldruck überein, wird der Ja-Verzweigung ("Y") folgend zum nächsten Verfahrensschritt 36 fortgefahren.

Im Schritt 36 erfolgt die Abfrage, ob der zurückgelegte Zusatzleerweg in zwei verschiedenen Radbremseinrichtungen des Bremssystems übereinstimmt. Hierbei wird insbesondere überprüft, ob der Zusatzleerweg an den Radbremseinrichtungen links und rechts der gleichen Fahrzeugachse übereinstimmt. Ist dies nicht der Fall, wird der Nein-Verzweigung folgend zum Schritt 37 vorgerückt und ein Warnsignal erzeugt, das auf einen Fehler im Bremssystem hindeutet. Anschließend wird zum nächsten Verfahrensschritt 38 verfahren.

Ergibt dagegen die Abfrage im Schritt 36, dass die Zusatzleerwege an den mindestens zwei unterschiedlichen Radbremseinrichtungen übereinstimmen, kann von einer ordnungsgemäßen Funktion ausgegangen und der Ja-Verzweigung folgend unmittelbar zum Schritt 38 vorgerückt werden.

Im Schritt 38 wird auf elektromechanischem Wege durch Betätigung des elektrischen Bremsmotors eine Bremskraft aufgebaut. Die Höhe der elektromechanischen Bremskraft kann beispielsweise anhand des Stromverlaufs des elektrischen Bremsmotors abgeschätzt werden.

Im nächsten Schritt 39 wird der hydraulische Druckabfall ausgeglichen, der durch die mechanische Verstellung des Bremskolbens über die Betätigung des Bremsmotors erzeugt worden ist. Die Kompensation des hydraulischen Druckabfalls erfolgt vorzugsweise durch Betätigung eines hydraulischen Stellers, insbesondere des gleichen hydraulischen Stellers wie zur Erzeugung des hydraulischen Bremsdrucks im Schritt 33 und während des Aufbaus der elektromechanischen Bremskraft.

Nachdem eine elektromechanische Soll-Bremskraft erreicht ist, wird der elektrische Bremsmotor abgeschaltet, wobei durch seine Selbsthemmung die erreichte Position des Bremskolbens beibehalten wird.

## Patentansprüche

1. Verfahren zum Bereitstellen einer Bremskraft in einem Fahrzeug, das eine hydraulische Fahrzeugbremse (1) mit einer oder mehreren Radbremseinrichtungen (9) und eine elektromechanische Bremsvorrichtung mit einem elektrischen Bremsmotor (13) aufweist, welcher einen Bremskolben (16) gegen eine Bremsscheibe (10) verstellt, wobei
a) zunächst über eine Betätigung des elektrischen Bremsmotors (13) der Leerlaufweg des elektrischen Bremsmotors (13) ohne elektromechanischen Bremskraftaufbau überwunden wird,
b) anschließend ein hydraulischer Bremsdruck erzeugt wird,
c) schließlich der elektrische Bremsmotor (13) zum Überwinden einer durch den hydraulischen Bremsdruck hervorgerufenen Verschiebung des Bremskolbens (16) und zum elektromechanischen Bremskraftaufbau erneut betätigt wird,
wobei die durch den hydraulischen Bremsdruck hervorgerufene Verschiebung des Bremskolbens (16) bestimmt und aus der Verschiebung des Bremskolbens (16) auf den tatsächlichen hydraulischen Bremsdruck geschlossen wird, wobei im Fall einer Abweichung des tatsächlichen hydraulischen Bremsdrucks von einem Soll-Bremsdruck ein Warnsignal erzeugt wird.

2. Verfahren nach Anspruch 1, **dadurch gekennzeichnet, dass** der Leerlaufweg an zwei Radbremseinrichtungen bestimmt und im Fall einer Abweichung ein Warnsignal erzeugt wird.

3. Verfahren nach Anspruch 1 oder 2, **dadurch gekennzeichnet, dass** ein hydraulischer Druckabfall, hervorgerufen durch elektromechanischen Bremskraftaufbau, durch Betätigung eines hydraulischen Stellers ausgeglichen wird.

4. Verfahren nach einem der Ansprüche 1 bis 3, **dadurch gekennzeichnet, dass** ein hydraulischer Druckabfall, hervorgerufen durch elektromechanischen Bremskraftaufbau, von vornherein über einen erhöhten hydraulischen Bremsdruck berücksichtigt wird.

5. Verfahren nach einem der Ansprüche 1 bis 4 zum Erzeugen einer Parkbremskraft im Stillstand des Fahrzeugs.

6. Verfahren nach einem der Ansprüche 1 bis 5 zum Erzeugen einer Bremskraft bei fahrendem Fahrzeug, vorzugsweise unterhalb eines Geschwindigkeitsgrenzwerts.

7. Regel- und/oder Steuergerät zur Durchführung des Verfahrens nach einem der Ansprüche 1 bis 6 zur Ansteuerung sowohl der einstellbaren Komponenten der hydraulischen Fahrzeugbremse (1) als auch der elektromechanischen Radbremseinrichtung (9).

## Claims

1. Method for providing a brake force in a vehicle which has a hydraulic vehicle brake (1) with one or more wheel brake devices (9) and an electromechanical brake device with an electric brake motor (13), which displaces a brake piston (16) against a brake disc (10), wherein
a) firstly, the idle travel of the electric brake motor (13) is overcome via an actuation of the electric brake motor (13) without building up electromechanical brake force,
b) a hydraulic brake pressure is then produced,
c) finally, the electric brake motor (13) is actuated again to overcome a displacement of the brake piston (16) caused by the hydraulic brake pressure and to build up electromechanical brake force,
wherein the displacement of the brake piston (16) caused by the hydraulic brake pressure is determined and the actual hydraulic brake pressure is inferred from the displacement of the brake piston (16), wherein, in the event of a deviation of the actual hydraulic brake pressure from a target brake pressure, a warning signal is produced.

2. Method according to Claim 1, **characterized in that** the idle travel is determined on two wheel brake devices and, in the event of a deviation, a warning signal is produced.

3. Method according to Claim 1 or 2, **characterized in that** a hydraulic pressure drop caused by building up electromechanical brake force is compensated for by actuating a hydraulic actuator.

4. Method according to one of Claims 1 to 3, **characterized in that** a hydraulic pressure drop caused by building up electromechanical brake force is considered from the start via an increased hydraulic brake pressure.

5. Method according to one of Claims 1 to 4 for producing a parking brake force when the vehicle is at a standstill.

6. Method according to one of Claims 1 to 5 for producing a brake force in a vehicle that is travelling, preferably below a speed limit.

7. Closed-loop and/or open-loop control device for carrying out the method according to one of Claims 1 to 6 for controlling both the adjustable components of the hydraulic vehicle brake (1) and the electromechanical wheel brake device (9).

## Revendications

1. Procédé de fourniture d'une force de freinage dans un véhicule, lequel possède un frein de véhicule hydraulique (1) pourvu d'un ou de plusieurs dispositifs de frein de roue (9) et d'un arrangement de frein électromécanique pourvu d'un moteur électrique de freinage (13), lequel positionne un piston de frein (16) contre un disque de frein (10),
a) la course à vide du moteur électrique de freinage (13) étant tout d'abord surmontée sans établissement de force de freinage électromécanique, par le biais d'un actionnement du moteur électrique de freinage (13),
b) une pression de freinage hydraulique étant ensuite générée,
c) finalement, le moteur électrique de freinage (13) étant une nouvelle fois actionné en vue de surmonter un déplacement du piston de frein (16) provoqué par la pression de freinage hydraulique et en vue de l'établissement de force de freinage électromécanique,
le déplacement du piston de frein (16) provoqué par la pression de freinage hydraulique étant déterminé et la pression de freinage hydraulique effective étant déduite du déplacement du piston de frein (16), un signal d'alerte étant généré dans le cas d'un écart entre la pression de freinage hydraulique effective et une pression de freinage de consigne.

2. Procédé selon la revendication 1, **caractérisé en ce que** la course à vide est déterminée au niveau de deux dispositifs de frein de roue et un signal d'alerte est généré dans le cas d'un écart.

3. Procédé selon la revendication 1 ou 2, **caractérisé en ce qu'**une chute de pression hydraulique, provoquée par l'établissement de force de freinage électromécanique, est compensée par l'actionnement d'un actionneur hydraulique.

4. Procédé selon l'une des revendications 1 à 3, **caractérisé en ce qu'**une chute de pression hydraulique, provoquée par l'établissement de force de freinage électromécanique, est prise en compte dès le départ par le biais d'une pression de freinage hydraulique accrue.

5. Procédé selon l'une des revendications 1 à 4 destiné à générer une force de freinage de stationnement lors de l'immobilisation du véhicule.

6. Procédé selon l'une des revendications 1 à 5 destiné à générer une force de freinage lorsque le véhicule est en déplacement, de préférence au-dessous d'une valeur limite de vitesse.

7. Contrôleur et/ou régulateur destiné à mettre en œuvre le procédé selon l'une des revendications 1 à 6 pour la commande à la fois des composants réglables du frein de véhicule hydraulique (1) ainsi que du dispositif de frein de roue (9) électromécanique.
